# DEMANDE DE BREVET EUROPEEN

(11) **EP 4 779 499 A1**
(43) Date de publication de la demande: **22.07.2026**
(21) Numéro de dépôt: 26152265.0
(22) Date de dépôt: 16.01.2026
(51) Int. Cl.: G06F 18/214, G06V 20/64

(54) **PROCÉDÉ ET SYSTÈME D'IDENTIFICATION D'UN OBJET**

(30) Priorité: 20.01.2025 FR 2500564
(71) Demandeur: Société Nationale SNCF, 93200 Saint-Denis (FR); SNCF Réseau, 93200 Saint-Denis (FR)
(72) Inventeur: NICODEME, Claire, 92190 MEUDON (FR); ZHANG, Shirui, 92150 SURESNES (FR); DESBOIS, Cédric, 71240 SAINT LOUP DE VARENNES (FR)
(74) Mandataire: Argyma

(57) **Abrégé**

Un procédé d'identification d'un objet (1) comprenant : - une étape d'acquisition (E1) d'une image (2) de l'objet (1), - une étape de classification (E2) mise en œuvre par un ordinateur grâce à un modèle (7) obtenu par apprentissage de l'image (2) dans une classe donnée (C) parmi des classes prédéterminées (C) associées chacune à une nature d'objet (3) prédéterminée, - une étape d'émission (E3) d'un signal d'identification (S) comprenant la nature d'objet (3) associée à la classe donnée (C), le procédé d'identification comprenant préalablement : - une étape de génération (A1) d'une représentation géométrique tridimensionnelle (5) d'un objet identifié (20) représentatif de l'objet (1), - une étape de génération (A3) de vues (6) de la représentation géométrique tridimensionnelle (5) définissant une base d'apprentissage (B), et - une étape d'apprentissage (A4) du modèle (7) à partir de la base d'apprentissage (B).

## Description

### DOMAINE TECHNIQUE

La présente invention concerne le domaine de l'identification d'un objet, et notamment de son état de santé dans le cadre d'une inspection.

De manière connue, le réseau ferroviaire est régulièrement inspecté afin de contrôler l'état de ses différents objets, notamment des pièces mécaniques, telles que les aiguillages et les éléments de signalisation et des pièces électroniques telles que des cartes. L'inspection est mise en œuvre sur site, à savoir aux abords des voies ferroviaires, dans un environnement potentiellement à risque où il est souhaité de limiter le temps de présence d'un opérateur. L'inspection nécessite également une expertise pour identifier les différents objets et déterminer un éventuel besoin de maintenance, impliquant dans certains cas une dépose pour réparer ou remplacer l'objet.

Dans les centres de maintenance ferroviaires, il est connu d'identifier les objets grâce à un algorithme de classification basé sur un modèle obtenu par apprentissage, connu sous le terme de « machine learning » ou « deep learning ». En pratique, l'objet à identifier est positionné sur un support, tel qu'un tapis roulant, avec un fond et selon une orientation prédéterminés, afin d'acquérir une photographie à partir d'une ou de plusieurs caméras fixes. La photographie est comparée à un ensemble de photographies de pièces mécaniques connues, préalablement acquises dans les mêmes conditions et formant une base d'apprentissage du modèle, afin de déterminer la classe prédéterminée la plus proche.

Pour permettre son utilisation lors d'une inspection sur site, une solution serait d'acquérir une ou plusieurs photographies de l'objet sur site avec une caméra mobile. Toutefois, ceci ne permettrait pas une identification fiable car les conditions d'acquisition seraient très différentes de celles de la base d'apprentissage (orientation, environnement, luminosité, obstacle, etc). Il en irait de même pour une utilisation dans un autre centre de maintenance. Une solution serait d'enrichir la base d'apprentissage avec des photographies de pièces mécaniques connues dans un grand nombre d'environnements intérieurs et extérieurs, selon différentes orientations et luminosité, mais cela serait très laborieux et chronophage.

L'invention vise ainsi à pouvoir identifier un objet dans tout environnement de manière simple, fiable et rapide.

### PRESENTATION DE L'INVENTION

L'invention concerne un procédé d'identification d'au moins un objet comprenant :
- Une étape d'acquisition d'au moins une image de l'objet,
- Une étape de classification, mise en œuvre par un ordinateur exécutant un algorithme de classification utilisant un modèle obtenu par apprentissage, de l'image dans une classe donnée parmi une pluralité de classes prédéterminées, chaque classe prédéterminée étant associée à une nature d'objet prédéterminée, et
- Une étape d'émission d'un signal d'identification comprenant la nature d'objet associée à la classe donnée.

Le procédé d'identification est remarquable en ce qu'il comprend, préalablement à l'étape de classification :
- une étape de génération d'au moins une représentation géométrique tridimensionnelle d'au moins un objet identifié représentatif de l'objet,
- une étape de génération d'une pluralité de vues de la représentation géométrique tridimensionnelle selon une pluralité d'angles de prise de vue, la pluralité de vues définissant une base d'apprentissage,
- une étape d'apprentissage du modèle à partir de la base d'apprentissage, de manière à définir les classes prédéterminées et les natures d'objet associées.

De manière avantageuse, l'invention permet de construire de manière simple et rapide une base d'apprentissage exhaustive pour entraîner le modèle de l'algorithme de classification. Un large panel de vues peut être créé à partir d'une représentation géométrique tridimensionnelle pour alimenter la base d'apprentissage en couvrant tous les angles de prise de vue, dans un ou plusieurs environnements. Le modèle ainsi obtenu par apprentissage permet de classer de manière fiable un objet tel qu'une pièce mécanique ou une pièce électronique à partir d'au moins une image prise selon un angle de prise de vue quelconque et dans un environnement quelconque, ce sans contrainte sur les conditions d'acquisition de l'image.

Selon un aspect de l'invention, l'objet se présente sous la forme d'une pièce ferroviaire. La pièce est de type mécanique, telle qu'un aiguillage ou un élément de signalisation, ou de type électronique, telle qu'une carte. L'invention permet de faciliter l'inspection du réseau ferroviaire ainsi que la maintenance dans un technicentre.

Selon un aspect de l'invention, l'étape de génération est mise en œuvre par modélisation numérique de l'objet identifié. Le modèle numérique ainsi acquis peut avantageusement servir de base pour simuler de manière simple et pratique différents états de l'objet : neuf, usé, usagé, défectueux. L'objet est dit dans un état neuf en ce qu'il ne présente pas de signes d'usage, par opposition à un objet dans un état usé ou usagé. L'état usagé correspond à des signes d'usage nécessitant une maintenance ou un remplacement, par opposition à l'état usé. Un état défectueux se caractérise par un ou plusieurs défauts lors de la fabrication de l'objet.

Selon un autre aspect de l'invention, l'étape de génération est mise en œuvre par captation optique de l'objet identifié, de préférence au moyen d'un LiDAR et/ou d'une caméra, permettant une identification plus facile de l'objet.

Selon un aspect de l'invention, lors de l'étape d'apprentissage, au moins une donnée de l'objet est associée à chaque classe prédéterminée, la donnée de l'objet étant choisie parmi : un matériau de l'objet identifié, une résistance mécanique de l'objet identifié, un état de santé de l'objet identifié, une disponibilité de l'objet identifié et une recommandation de maintenance de l'objet identifié, le signal d'identification comprenant la donnée de l'objet associée à la classe donnée. Ceci permet de fournir des informations sur l'état de santé ainsi que des recommandations de maintenance à l'opérateur.

Selon un aspect de l'invention, l'étape de génération est mise en œuvre à partir de l'objet identifié dans un état neuf et/ou dans au moins un état usagé. De préférence, l'étape de génération est mise en œuvre à partir de l'objet identifié dans au moins un état défectueux. De préférence, l'étape de génération est mise en œuvre à partir de l'objet identifié dans au moins un état usé. Ceci augmente l'exhaustivité de la base d'apprentissage.

Selon un aspect de l'invention, le procédé comprend au moins une étape de traitement de la représentation géométrique tridimensionnelle. Selon un aspect préféré, lors de l'étape de traitement, un fond de la représentation géométrique tridimensionnelle est supprimé ou remplacé par un fond prédéterminé ou aléatoire. Ceci augmente la robustesse et l'exhaustivité de la base d'apprentissage.

L'invention concerne également un système d'identification d'au moins un objet adapté pour mettre en œuvre le procédé d'identification tel que décrit précédemment et comprenant :
- Au moins un organe d'acquisition de ladite au moins une image de l'objet,
- Au moins un organe d'émission du signal d'identification,
- Au moins un organe de génération de la représentation géométrique tridimensionnelle de l'objet identifié,
- Au moins un ordinateur adapté pour exécuter l'algorithme de classification utilisant le modèle obtenu par apprentissage, l'ordinateur étant connecté à l'organe d'acquisition, à l'organe d'émission et à l'organe de génération, l'ordinateur étant adapté pour mettre en œuvre l'étape de classification, l'étape de génération de la pluralité de vues et l'étape d'apprentissage.

Selon un aspect de l'invention, le système d'identification comprend un dispositif portable connecté à l'ordinateur et dans lequel sont montés l'organe d'acquisition et l'organe d'émission. Selon un aspect préféré, le dispositif portable est un téléphone intelligent ou une tablette tactile. Ceci permet avantageusement d'identifier des objets sur site ou sur différents centres de maintenance, de manière simple et pratique.

### PRESENTATION DES FIGURES

L'invention sera mieux comprise à la lecture de la description qui va suivre, donnée à titre d'exemple, et se référant aux figures suivantes, données à titre d'exemples non limitatifs, dans lesquelles des références identiques sont données à des objets semblables.
La figure 1 est une représentation schématique du procédé d'identification selon un mode de réalisation de l'invention.
La figure 2 est une représentation schématique du système d'identification selon une forme de réalisation de l'invention.
La figure 3 est une représentation schématique des étapes du procédé d'identification de la figure 1 permettant de définir la base d'apprentissage et entraîner le modèle de l'algorithme de classification.

Il faut noter que les figures exposent l'invention de manière détaillée pour mettre en œuvre l'invention, lesdites figures pouvant bien entendu servir à mieux définir l'invention le cas échéant.

### DESCRIPTION DETAILLEE DE L'INVENTION

L'invention concerne un système et un procédé d'identification permettant d'identifier un objet, à savoir déterminer sa nature, et de préférence déterminer son état de santé lors d'une inspection. L'invention permet notamment de déterminer un besoin de maintenance ou de remplacement de l'objet.

L'invention s'applique, de manière non restrictive, au domaine ferroviaire. L'objet se définit dans cet exemple comme un élément du réseau ferroviaire, tel qu'une pièce mécanique, par exemple un aiguillage ou un élément de signalisation, ou une pièce électronique, par exemple une carte.

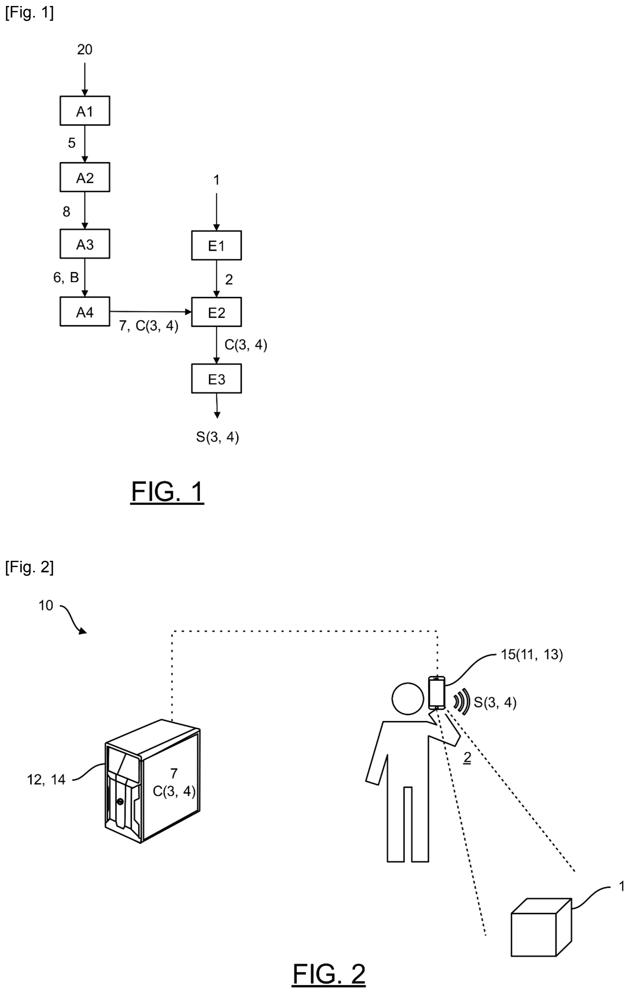

Selon l'invention et en référence à la figure 1, le procédé d'identification comprend
- Une étape d'acquisition E1 d'une image 2 de l'objet 1,
- Une étape de classification E2, mise en œuvre par un ordinateur 12 exécutant un algorithme de classification utilisant un modèle 7 obtenu par apprentissage, de l'image 2 de l'objet 1 dans une classe donnée C parmi un ensemble de classes prédéterminées C associées chacune à une nature d'objet 3 prédéterminée, et
- Une étape d'émission E3 d'un signal d'identification S comprenant la nature d'objet 3 associée à la classe donnée C.

Toujours selon l'invention et en référence à la figure 1, le procédé d'identification comprend également, préalablement à l'étape de classification E2 :
- une étape de génération A1 d'une représentation géométrique tridimensionnelle 5 d'un objet identifié 20 représentatif de l'objet 1,
- selon un aspect préféré, une étape de traitement A2 de la représentation géométrique tridimensionnelle 5,
- une étape de génération A3 d'un ensemble de vues 6 de la représentation géométrique tridimensionnelle 5 selon un ensemble d'angles de prise de vue, l'ensemble de vues 6 définissant une base d'apprentissage B,
- une étape d'apprentissage A4 du modèle 7 à partir de la base d'apprentissage B.

La figure 2 illustre un système d'identification 10 permettant de mettre en œuvre le procédé d'identification 1. Le système d'identification 10 comprend un organe d'acquisition 11 de l'image 2, un organe d'émission 13 du signal d'identification S, un organe de génération 14 de la représentation géométrique tridimensionnelle 5 et un ordinateur 12 adapté pour exécuter l'algorithme de classification utilisant le modèle 7 obtenu par apprentissage et connecté directement ou indirectement à chacun des organes 11, 13, 14.

De manière avantageuse, l'invention permet de construire de manière simple et rapide une base d'apprentissage B exhaustive pour entraîner le modèle 7. Pour un objet 1 donné, à partir d'une représentation géométrique tridimensionnelle 5 d'un objet identifié 20 représentatif, une multitude de vues 6 peuvent être extraites de sorte à alimenter la base d'apprentissage B en couvrant tous les angles de prise de vue, dans un ou plusieurs environnements. Le modèle 7 ainsi obtenu par apprentissage permet de classer de manière fiable un objet 1 à partir d'une image 2 prise selon un angle de prise de vue quelconque et dans un environnement quelconque. L'invention permet ainsi d'identifier un objet 1 qu'il soit monté ou démonté, sur site ou dans un centre de maintenance, à partir d'une image 2 acquise selon des conditions non contraignantes.

De préférence, les étapes A1-A4 permettant de construire la base d'apprentissage B et d'entraîner le modèle 7 sont mises en œuvre préalablement aux étapes E1-E3 d'identification d'un objet 1 au moyen du modèle 7.

En référence aux figures 1 à 3, l'étape de génération A1 est mise en œuvre à partir d'un objet identifié 20 qui est représentatif de l'objet 1 à identifier. La nature et les données concernant l'objet identifié 20 sont connues contrairement à l'objet 1 à identifier. L'objet identifié 20 est représentatif de l'objet 1 en ce qu'il comporte la même nature, par exemple un aiguillage, et de préférence les mêmes données, tel que le même état d'usure.

Selon un aspect préféré, l'étape de génération A1 est mise en œuvre par modélisation numérique. L'organe de génération 14, typiquement sous la forme d'un ordinateur 12, permet de construire une représentation géométrique tridimensionnelle 5 de l'objet identifié 20 se présentant sous la forme d'un modèle numérique en trois dimensions.

Selon un autre aspect, l'étape de génération A1 est mise en œuvre par captation optique à partir de l'objet identifié 20. L'organe de génération 14 se présente dans cet exemple sous la forme d'un capteur optique, de préférence de type LiDAR et/ou d'une caméra. Dans le cas d'un LiDAR, la représentation géométrique tridimensionnelle 5 se présente typiquement sous la forme d'un nuage de points obtenu à partir de la réflexion d'un faisceau d'ondes incidentes sur l'objet identifié 20.

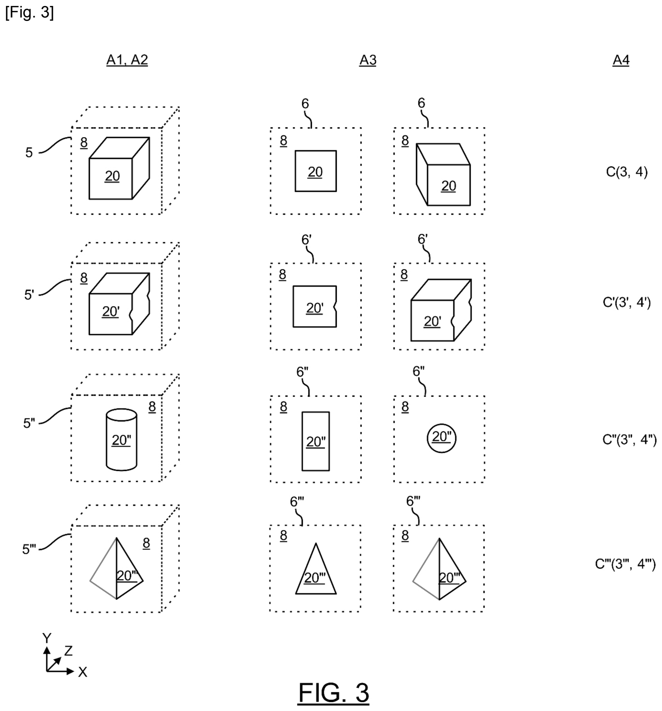

Comme illustré sur la figure 3, la représentation géométrique tridimensionnelle 5 de l'objet identifié 20, qu'il s'agisse d'un modèle numérique ou d'une représentation obtenue par captation optique, s'étend dans un repère à trois axes (X, Y, Z) et est pivotable selon un ou plusieurs des axes X, Y, Z du repère, de préférence tous les axes X, Y, Z, du repère.

Selon un aspect préféré illustré sur la figure 3, l'étape de génération A1 d'une représentation géométrique tridimensionnelle 5, 5", 5"' est mise en œuvre pour un ensemble d'objets identifiés 20, 20", 20"', telles que différents types d'aiguillage et/ou différents éléments de signalisation, lumineux et/ou mécaniques. La base d'apprentissage B permet ainsi d'identifier un large panel d'objets 1.

Selon un aspect préféré illustré sur la figure 3, l'étape de génération A1 est mise en œuvre dans plusieurs états de chaque objet identifié 20, 20' parmi : un état neuf, un ou plusieurs états usagés, un ou plusieurs états défectueux, un ou plusieurs états usés. Les états usagés, défectueux et usés sont par exemple simulés numériquement à partir d'une représentation géométrique tridimensionnelle 5 de l'objet identifié 20, 20", 20'" dans un état neuf. Ceci participe à l'exhaustivité de la base d'apprentissage B et rend l'identification plus fiable. Ceci permet notamment de caractériser avec précision le besoin de maintenance et/ou de remplacement en fonction du type d'usure et/ou de défauts de l'objet 1.

A la fin de l'étape de génération A1, une ou plusieurs représentations géométriques 5, 5', 5", 5‴ d'un ou de plusieurs objets identifiés 20, 20', 20", 20"' dans un ou plusieurs états sont stockées directement dans l'ordinateur 12 ou indirectement dans un organe de stockage connecté à l'ordinateur 12.

Une étape de traitement A2 est de préférence mise en œuvre suite à l'étape de génération A1. L'étape de traitement A2, typiquement mise en œuvre par l'ordinateur 12, permet par exemple de supprimer le fond 8 de la représentation géométrique tridimensionnelle 5, par exemple par détourage. L'étape de traitement A2 permet alternativement de remplacer le fond 8 de la représentation géométrique tridimensionnelle 5 par un fond prédéterminé, typiquement d'un environnement de l'objet identifié 20, tel que d'un centre de maintenance ou d'un site d'utilisation, ou aléatoire. De préférence, pour un objet identifié 20 dans un état donné, plusieurs représentations géométriques tridimensionnelles 5 avec différents fonds 8 sont générées lors de l'étape de traitement A2. Ceci participe à l'exhaustivité de la base d'apprentissage B et rend l'identification plus fiable.

De manière alternative ou complémentaire, l'étape de traitement A2 permet de modifier la couleur et/ou la luminosité de la représentation géométrique tridimensionnelle 5, et/ou encore d'ajouter un élément tiers dans la représentation géométrique tridimensionnelle 5, tel qu'un obstacle. Ceci participe à l'exhaustivité de la base d'apprentissage B et rend l'identification plus fiable.

A la fin de l'étape de traitement A2, la ou les représentations géométriques tridimensionnelles 5, 5', 5", 5"' sont stockées directement dans l'ordinateur 12 ou indirectement dans un organe de stockage connecté à l'ordinateur 12.

Comme illustré sur la figure 3, lors de l'étape de génération A3, un ensemble de vues 6 de la représentation géométrique tridimensionnelle 5 sont capturées selon différents angles de prise de vue. L'étape de génération A3 est de préférence mise en œuvre par l'ordinateur 12, typiquement par capture d'écran en pivotant la représentation géométrique tridimensionnelle 5 dans le repère (X, Y, Z). Les vues 6 se présentent sous la forme d'images, en deux dimensions. En pratique, une multitude de vues 6 sont extraites à partir de chaque représentation géométrique tridimensionnelle 5 de manière à couvrir tous les angles de prise de vue. L'ensemble des vues 6, à savoir acquises à partir de chaque représentation géométrique tridimensionnelle 5, 5', 5", 5‴ de chaque objet identifié 20, 20', 20", 20"', définissent ensemble la base d'apprentissage B, stockée directement dans l'ordinateur 12 ou indirectement dans un organe de stockage connecté à l'ordinateur 12. L'étape de génération A3 présente l'avantage d'être simple et rapide à mettre en œuvre tout en formant une base d'apprentissage B particulièrement exhaustive.

Selon un aspect préféré, la base d'apprentissage B est complétée par la ou les représentations géométriques tridimensionnelles 5.

Comme illustré sur la figure 3, la base d'apprentissage B permet ensuite d'entraîner le modèle 7 d'un algorithme de classification lors de l'étape d'apprentissage A4. L'algorithme de classification utilise de préférence un modèle 7 par apprentissage profond, connu sous le terme de « deep learning ». L'algorithme de classification est de préférence YOLO (« You Only Look Once »). L'algorithme de classification est alternativement un transformateur de vision présentant une architecture DETR (« DEtection TRansformer ») ou Swin. L'entraînement du modèle 7 à partir des vues 6 de la base d'apprentissage B, correspondant à des objets identifiés 20, 20', 20", 20"', autrement dit connus, permet de déterminer des classes C associées chacune à une nature d'objet 3, 3', 3", 3"', par exemple un type d'aiguillage ou un type d'élément de signalisation.

Selon un aspect préféré illustré sur la figure 3, à chaque classe C prédéterminée sont également associées une ou plusieurs données de l'objet 4, 4', 4", 4‴, telles que :
- Un ou plusieurs matériaux de l'objet identifié 20, 20', 20", 20"',
- Une résistance mécanique de l'objet identifié 20, 20', 20", 20‴,
- Un état de santé de l'objet identifié 20, 20', 20", 20"' : neuf, usé, usagé, défectueux,
- Une disponibilité de l'objet identifié 20, 20', 20", 20‴ : en stock, en rupture de stock,
- Une recommandation de maintenance ou de remplacement de l'objet identifié 20, 20', 20", 20‴, le cas échéant : dépose ou non, type de maintenance, etc.

A la fin de l'étape d'apprentissage E4, l'algorithme de classification est opérationnel pour mettre en œuvre l'étape de classification E2 d'un objet 1 à identifier. Les étapes A1-A4 permettant de construire la base d'apprentissage B et d'entraîner le modèle 7 peuvent en outre être facilement mises de nouveau en œuvre ultérieurement pour de nouveaux objets identifiés 20 ou d'éventuelles modifications d'objets identifiés 20 existants.

Comme illustré sur les figures 1 et 2, avant l'étape de classification E2, une étape d'acquisition E1 est mise en œuvre lors de laquelle une ou plusieurs images 2 d'un objet 1 à identifier sont capturées par l'organe d'acquisition 11. L'objet 1 est dans un environnement quelconque, en intérieur comme en extérieur, par exemple sur site, tel qu'aux abords des rails ferroviaires, ou dans un centre de maintenance, tel qu'un technicentre. L'objet 1 est dans un état de fonctionnement quelconque, à savoir en cours d'utilisation ou non, montée ou déposée. L'image 2 est acquise selon un angle de prise de vue quelconque. L'image 2 comprend tout ou partie de l'objet 1, de préférence au moins une partie caractéristique permettant son identification visuelle. Le procédé d'identification selon l'invention offre avantageusement une grande souplesse quant aux conditions d'acquisition de l'image 2.

De préférence, une seule image 2 est acquise et suffit pour mettre en œuvre l'étape de classification E2. Ceci permet de limiter le temps d'acquisition, notamment dans le cas d'une acquisition dans un environnement potentiellement à risque, tel qu'aux abords des rails ferroviaires. Il va cependant de soi que plusieurs images 2, notamment une vidéo, peuvent être acquises pour renforcer la fiabilité de l'identification.

De préférence, l'organe d'acquisition 11 est portable afin de permettre son utilisation dans différents environnements. L'organe d'acquisition 11 est par exemple un appareil photographique ou une caméra, de préférence intégré dans un dispositif portable 15, tel qu'un téléphone intelligent ou une tablette tactile. Le dispositif portable 15 est connecté de manière filaire ou non filaire à l'ordinateur 12. De manière moins préférée, l'organe d'acquisition 11 est alternativement monté fixe.

A la fin de l'étape d'acquisition E1, la ou les images 12 de l'objet 1 à identifier sont transmises à l'ordinateur 12.

Comme illustré sur les figures 1 et 2, lors de l'étape de classification E2, l'exécution sur l'ordinateur 12 de l'algorithme de classification, préalablement entraîné à partir de la base d'apprentissage B, permet de déterminer, à partir de l'image 2, laquelle des classes prédéterminées C est la plus proche. La classe prédéterminée C obtenue en sortie, ainsi que la nature de l'objet 3 associée, et de préférence la ou les données de l'objet 4 associées, sont stockées dans l'ordinateur 12 ou un organe de stockage connecté à l'ordinateur 12, afin d'être transmises à l'organe d'émission 13.

Selon un aspect, en l'absence d'affiliation de l'image à une classe prédéterminée, une nouvelle classe C est générée et associée à l'image 2. Le signal d'identification S comprend alors une alerte d'absence d'identification.

Comme illustré sur les figures 1 et 2, lors de l'étape d'émission E3, l'organe d'émission 13 émet un signal d'identification S comprenant la nature de l'objet 3 et, de préférence, la ou les données de l'objet 4 transmises par l'ordinateur 12. Le signal d'identification S est par exemple de type auditif, émis par un organe d'émission 13 tel qu'un haut-parleur, ou de type visuel, émis par un organe d'émission 13 tel qu'un écran. L'organe d'émission 13 est de préférence intégré avec l'organe d'acquisition 11 dans le dispositif portable 15. Un signal d'identification S auditif est avantageux lors d'une mise en œuvre du procédé d'identification sur site, dans un environnement potentiellement à risque, où il est souhaité que l'opérateur soit vigilant à son environnement et ait les mains libres.

L'invention permet ainsi avantageusement de déterminer, à partir d'une image 2, la nature d'un objet 3, par exemple une pièce ferroviaire, ainsi qu'une ou plusieurs données de l'objet 4. Ceci permet d'identifier de manière simple et rapide, sans expertise de l'opérateur ou en complément de celle-ci, l'objet 1 et son état de santé de manière simple et pratique, notamment lors d'une inspection ou d'une maintenance. L'invention est particulièrement avantageuse en ce qu'elle permet une identification fiable peu importe l'environnement et l'état dans lequel se trouve l'objet 1, ce sans contrainte sur les conditions d'acquisition de l'image 2.

## Revendications

1. Procédé d'identification d'au moins un objet (1) comprenant :
- Une étape d'acquisition (E1) d'au moins une image (2) de l'objet (1),
- Une étape de classification (E2), mise en œuvre par un ordinateur (12) exécutant un algorithme de classification utilisant un modèle (7) obtenu par apprentissage, de l'image (2) dans une classe donnée (C) parmi une pluralité de classes prédéterminées (C), chaque classe prédéterminée (C) étant associée à une nature d'objet (3) prédéterminée,
- Une étape d'émission (E3) d'un signal d'identification (S) comprenant la nature d'objet (3) associée à la classe donnée (C),
- Le procédé d'identification étant **caractérisé en ce qu'il** comprend, préalablement à l'étape de classification (E2) :
• une étape de génération (A1) d'au moins une représentation géométrique tridimensionnelle (5) d'au moins un objet identifié (20) représentatif de l'objet (1),
• une étape de génération (A3) d'une pluralité de vues (6) de la représentation géométrique tridimensionnelle (5) selon une pluralité d'angles de prise de vue, la pluralité de vues (6) définissant une base d'apprentissage (B),
• une étape d'apprentissage (A4) du modèle (7) à partir de la base d'apprentissage (B), de manière à définir les classes prédéterminées (C) et les natures d'objet (3) associées.

2. Procédé d'identification selon la revendication 1, dans lequel l'objet (1) se présente sous la forme d'une pièce ferroviaire.

3. Procédé d'identification selon l'une des revendications 1 et 2, dans lequel l'étape de génération (A1) est mise en œuvre par modélisation numérique de l'objet identifié (20).

4. Procédé d'identification selon l'une des revendications 1 et 2, dans lequel l'étape de génération (A1) est mise en œuvre par captation optique de l'objet identifié (20), de préférence au moyen d'un LiDAR et/ou d'une caméra.

5. Procédé d'identification selon l'une des revendications 1 à 4, dans lequel, lors de l'étape d'apprentissage (A4), au moins une donnée de l'objet (4) est associée à chaque classe prédéterminée (C), la donnée de l'objet (4) étant choisie parmi : un matériau de l'objet identifié (20), une résistance mécanique de l'objet identifié (20), un état de santé de l'objet identifié (20), une disponibilité de l'objet identifié (20) et une recommandation de maintenance de l'objet identifié (20), le signal d'identification (S) comprenant la donnée de l'objet (4) associée à la classe donnée (C).

6. Procédé d'identification selon l'une des revendications 1 à 5, dans lequel l'étape de génération (A1) est mise en œuvre à partir de l'objet identifié (20) dans un état neuf et/ou dans au moins un état usagé, et de préférence dans au moins un état défectueux, et préférentiellement dans au moins un état usé.

7. Procédé d'identification selon l'une des revendications 1 à 6, comprenant au moins une étape de traitement (A2) de la représentation géométrique tridimensionnelle (5).

8. Procédé d'identification selon la revendication 7, dans lequel, lors de l'étape de traitement (A2), un fond (8) de la représentation géométrique tridimensionnelle (5) est supprimé ou remplacé par un fond prédéterminé ou aléatoire.

9. Système d'identification (10) d'au moins un objet (1) adapté pour mettre en œuvre le procédé d'identification selon l'une des revendications 1 à 8 et comprenant :
- Au moins un organe d'acquisition (11) de ladite au moins une image (2) de l'objet (1),
- Au moins un organe d'émission (13) du signal d'identification (S),
- Au moins un organe de génération (14) de la représentation géométrique tridimensionnelle (5) de l'objet identifié (20),
- Au moins un ordinateur (12) adapté pour exécuter l'algorithme de classification utilisant le modèle (7) obtenu par apprentissage, l'ordinateur (12) étant connecté à l'organe d'acquisition (11), à l'organe d'émission (13) et à l'organe de génération (14), l'ordinateur (12) étant adapté pour mettre en œuvre l'étape de classification (E2), l'étape de génération (A3) de la pluralité de vues (6) et l'étape d'apprentissage (A4).

10. Système d'identification (10) selon la revendication 9, comprenant un dispositif portable (15) connecté à l'ordinateur (12) et dans lequel sont montés l'organe d'acquisition (11) et l'organe d'émission (13).
